# EUROPEAN PATENT APPLICATION

(11) **EP 4 823 236 A1**
(43) Date of publication of application: **14.10.2026**
(21) Application number: 24913435.4
(22) Date of filing: 26.12.2024
(51) Int. Cl.: H05B 6/06, H05B 6/12, G06N 20/00, G08B 21/18

(54) **COOKING DEVICE AND METHOD FOR CONTROLLING COOKING DEVICE**

(30) Priority: 28.12.2023 KR 20230194876
(71) Applicant: LG Electronics Inc., Yeongdeungpo-gu Seoul 07336 (KR)
(72) Inventor: KU, Minjoo, Seoul 08592 (KR); OK, Seungbok, Seoul 08592 (KR); CHO, Chu Hyoung, Seoul 08592 (KR); SEONG, Ho Jae, Seoul 08592 (KR); PARK, Byeong Wook, Seoul 08592 (KR)
(74) Representative: Vossius & Partner Patentanwälte Rechtsanwälte mbB
(86) International application number: PCT/KR2024/021200
(87) International publication number: WO 2025/143828

(57) **Abstract**

A cooking device according to one embodiment may comprise: a heating means, a temperature sensor and a controller. In one embodiment, the controller may: receive cooking information from a user; receive a boiling alarm timing from the user; receive a heating start command from the user; perform a heating operation by driving the heating means according to the heating start command; determine a temperature value of a load in a container provided to the heating area on the basis of at least one of cooking type information, cooking amount information, and ingredient status information, and a temperature value sensed by the temperature sensor; compare a reference temperature value corresponding to the boiling alarm timing with the temperature value of the load; and perform a boiling alarm operation if the temperature value of the load is greater than or equal to the reference temperature value.

## Description

### BACKGROUND

### Technical Field

Present disclosure relates to a cooking device and a method for controlling a cooking device.

### Description of the Related Art

A cooking device is a home appliance primarily used for cooking and processing food. Today, the cooking device is used in kitchens to automate or assist with cooking-related tasks, and cooking devices integrating various functions and technologies are being released.

To cook food, the cooking device may generate thermal energy. The type of cooking device may vary depending on the means for generating thermal energy, that is, the type of heating means. Examples of heating means provided in the cooking device include a working coil or a planar heating element (electric range), a gas burner (gas range), etc.

When a user sets a heat level of the heating means provided in the cooking device, the heating means operates according to the heat level set by the user, thereby heating a load in a container provided in the cooking device. Generally, the heating means set by the user is not automatically adjusted, and the heat level set by the user is maintained at a fixed level. Accordingly, there is the inconvenience of the user having to continuously monitor the state of the cooking device and the container until the load in the container boils as a result of heating by the cooking device.

### Disclosure of the invention

### Technical Problem

The present disclosure is directed to providing a cooking device and a method for controlling a cooking device, which can accurately notify a user when a load in a container has reached a boiling state by estimating a temperature of the load in the container based on information input by the user.

Objects of the present disclosure are not limited to the above objects, and other objects and advantages of the present disclosure that are not described can be more clearly understood by various embodiments of the present disclosure. In addition, the objects and advantages of the present disclosure may be realized by the components stated in the claims and combinations thereof.

### Means for Solving the Problems

A cooking device according to one embodiment may comprise: a heating means disposed at a position corresponding to a heating area; a temperature sensor disposed on one side of the heating means; and a controller for controlling driving of the heating means.

In one embodiment, the controller may: receive cooking information from a user; receive a boiling alarm timing from the user; receive a heating start command from the user; perform a heating operation by driving the heating means according to the heating start command; determine a temperature value of a load in a container provided to the heating area on the basis of at least one of cooking type information, cooking amount information, and ingredient status information, and a temperature value sensed by the temperature sensor; compare a reference temperature value corresponding to the boiling alarm timing with the temperature value of the load; and perform a boiling alarm operation if the temperature value of the load is greater than or equal to the reference temperature value.

In one embodiment, the cooking information may include at least one of the cooking type information, the cooking amount information, and the ingredient status information.

In one embodiment, the controller may determine the temperature value of the load using a pre-generated temperature value determination model.

In one embodiment, the temperature value determination model may be generated by machine learning performed in a state in which the cooking information and the temperature value are set as inputs and the temperature value of the load is set as a target.

In one embodiment, when the boiling alarm timing is set to a time point earlier than a predetermined reference time point, the reference temperature value may decrease, and when the boiling alarm timing is set to a time point later than the reference time point, the reference temperature value may increase.

In one embodiment, the controller may calculate a temperature value distribution of the load in the container based on the cooking information and the temperature value sensed by the temperature sensor, and determine that any one of the temperature values included in the distribution is the temperature value of the load in the container.

In one embodiment, the boiling alarm operation may be an operation in which a predetermined sound or message is output through a user terminal or the cooking device.

In one embodiment, the controller may maintain a heat level of the heating means at a predetermined level when the temperature value of the load is greater than or equal to the reference temperature value.

In one embodiment, a method for controlling a cooking device including a heating means disposed at a position corresponding to a heating area, a temperature sensor disposed on one side of the heating means, and a controller for controlling driving of the heating means may include receiving cooking information from a user, receiving a boiling alarm timing from the user, receiving a heating start command from the user, driving the heating means to perform a heating operation according to the heating start command, determining a temperature value of a load in a container provided to the heating area based on at least one of cooking type information, cooking amount information, and ingredient status information, and a temperature value sensed by the temperature sensor, comparing a reference temperature value corresponding to the boiling alarm timing with the temperature value of the load, and performing a boiling alarm operation when the temperature value of the load is greater than or equal to the reference temperature value.

In one embodiment, the cooking information may include at least one of the cooking type information, the cooking amount information, and the ingredient status information.

In one embodiment, the determining of the temperature value of the load in the container provided to the heating area may include determining the temperature value of the load using a pre-generated temperature value determination model.

In one embodiment, the temperature value determination model may be generated by machine learning performed in a state in which the cooking information and the temperature value are set as inputs and the temperature value of the load is set as a target.

In one embodiment, when the boiling alarm timing is set to a time point earlier than a predetermined reference time point, the reference temperature value may decrease, and when the boiling alarm timing is set to a time point later than the reference time point, the reference temperature value may increase.

In one embodiment, the determining of the temperature value of the load in the container provided to the heating area may include calculating a temperature value distribution of the load in the container, and determining that any one of the temperature values included in the distribution is the temperature value of the load in the container.

In one embodiment, the performing of the boiling alarm operation when the temperature value of the load is greater than or equal to the reference temperature value may include controlling a predetermined sound or message to be output through a user terminal or the cooking device.

In one embodiment, the method may include maintaining a heat level of the heating means at a predetermined level when the temperature value of the load is greater than or equal to the reference temperature value.

### Advantageous Effects

According to embodiments, when a load in a container is heated using a cooking device, a temperature of the load in the container can be estimated based on information input by a user. Accordingly, it is possible to accurately notify the user that the load in the container has reached a boiling state. Accordingly, during a process of heating the load in the container using the cooking device, the user can easily recognize that the load in the container has reached the boiling state without directly monitoring the state of the cooking device or the container.

### Brief Description of Drawings

FIG. 1 shows a configuration of a cooking device, a user terminal, and a management server according to one embodiment.
FIG. 2 is an exploded perspective view of the cooking device according to one embodiment.
FIG. 3 shows a control unit of the cooking device according to one embodiment.
FIG. 4 shows a cooking information input screen displayed on a display of the user terminal in one embodiment.
FIG. 5 shows a boiling notification function setting screen displayed on the display of the user terminal in one embodiment.
FIG. 6 is a flowchart showing a method for controlling a cooking device according to one embodiment.

### Embodiments for implementing the invention

The above objects, features, and advantages will be described below in detail with reference to the accompanying drawings, and thus those skilled in the art to which the present disclosure pertains will be able to easily carry out the technical spirit of the present disclosure. In describing the present disclosure, when it is determined that a detailed description of the known technology related to the present disclosure may unnecessarily obscure the gist of the present disclosure, the detailed description thereof will be omitted. Hereinafter, various exemplary embodiments of the present disclosure will be described in detail with reference to the accompanying drawings. In the drawings, the same reference numerals are used to denote the same or similar components.

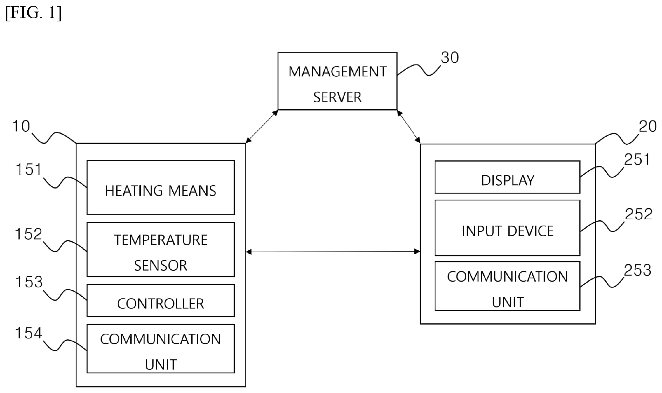

FIG. 1 shows a configuration of a cooking device, a user terminal, and a management server according to one embodiment.

A cooking device 10 according to one embodiment may include a heating means 151, a temperature sensor 152, a controller 153, and a communication unit 154.

The cooking device 10 may include a heating area. A user may supply a container containing a load (e.g., food) to be cooked to the heating area.

The cooking device 10 may include the heating means 151 disposed at a position corresponding to the heating area. The heating means 151 may supply thermal energy to the container to heat the container or the load in the container provided to the heating area of the cooking device 10. Examples of the heating means 151 include a working coil, a planar heating element, a gas burner, and the like, but the type of heating means 151 is not limited thereto.

The temperature sensor 152 may be disposed on one side of the heating means 151. The temperature sensor 152 may sense a temperature value measured at its installed position and transmit the sensed temperature value to the controller 153.

The controller 153 may control the operation of the heating means 151. Although not shown, the cooking device 10 may include an input means (e.g., a touch panel or a knob) for adjusting or setting a heat level of each heating area or for inputting a heating start command or a heating end command for each heating area. When the heating start command is input through the input means (not shown), the controller 153 may drive the heating means 151 corresponding to each heating area according to the heat level set through the input means (not shown). When the heating end command is input through the input means (not shown), the controller 153 may stop the operation of the heating means 151.

The communication unit 154 may communicate with a management server 30 or a user terminal 20 through wireless communication or wired communication. The communication unit 154 may receive information input by the user through the user terminal 20 from the user terminal 20 or the management server 30. The communication unit 154 may transmit information related to the operation of the cooking device 10 or information input by the user through the cooking device 10 to the management server 30 or the user terminal 20.

The user terminal 20 may include a display 251, an input device 252, and a communication unit 253. Examples of the user terminal 20 may include a mobile terminal such as a smartphone, a tablet, a laptop computer, or a desktop computer, but the type of the user terminal 20 is not limited thereto.

The display 251 may display information stored in the user terminal 20 or information input by the user through the input device 252.

The input device 252 is a means for inputting information desired by the user. In one embodiment, the display 251 and the input device 252 may be implemented as a single device, such as a touch panel.

The communication unit 253 may communicate with the cooking device 10 or the management server 30 through wireless communication or wired communication. The communication unit 154 may receive information related to the operation of the cooking device 10 or information input by the user through the cooking device 10 from the cooking device 10 or the management server 30. The communication unit 154 may transmit the information input by the user through the input device 252 to the cooking device 10 or the management server 30. Although not shown, the communication unit 253 may be connected to an access point (AP) that performs wired or wireless communication, and may communicate with the cooking device 10 or the management server 30 through the AP.

The management server 30 may manage a user account of a user using the cooking device 10 and the user terminal 20, and devices registered to the user account. In one embodiment, the user may register the cooking device 10 to the user account stored in the management server 30 using the user terminal 20.

The management server 30 may receive information related to the operation of the cooking device 10 from the cooking device 10. The management server 30 may transmit the information received from the cooking device 10 to the user terminal 20. Accordingly, the user may check information related to the cooking device 10 through the user terminal 20.

In addition, the management server 30 may receive information or commands input by the user through the user terminal 20. The management server 30 may transmit the information or commands received from the user terminal 20 to the cooking device 10.

According to an embodiment, the cooking device 10 and the user terminal 20 may not exchange information through the management server 30. That is, the cooking device 10 and the user terminal 20 may exchange the information directly with each other.

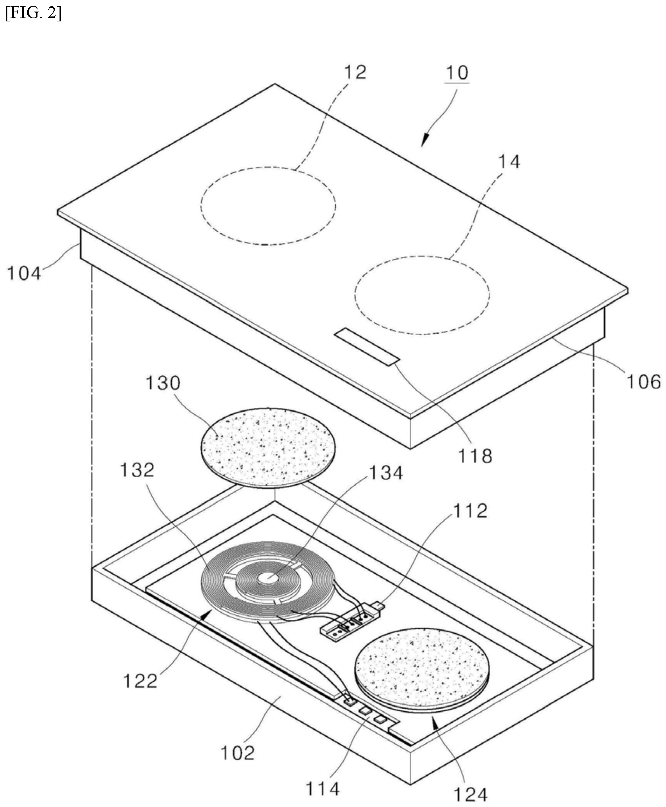

FIG. 2 is an exploded perspective view of the cooking device according to one embodiment.

FIG. 2 shows an induction heating device 10 as an example of the cooking device 10 described with reference to FIG. 1. The induction heating device 10 according to one embodiment may include a case 102 constituting a main body and a cover plate 104 coupled to the case 102 to seal the case 102.

The cover plate 104 may be coupled to an upper surface of the case 102 to seal a space formed inside the case 102. The cover plate 104 may include a top plate 106 on which a container for cooking food may be placed. In one embodiment, the top plate 106 may be formed of a reinforced glass material such as ceramic glass, but the material of the top plate 106 may vary depending on the embodiment.

Heating areas 12 and 14 corresponding to working coil assemblies 122 and 124 may be formed on the top plate 106. To enable the user to clearly recognize positions of the heating areas 12 and 14, lines or shapes corresponding to the heating areas 12 and 14 may be printed or displayed on the top plate 106.

The case 102 may have a cuboid shape with an open top. The working coil assemblies 122 and 124 for heating a container may be disposed in the space formed inside the case 102. In addition, an interface unit 114 having a function of allowing the user to apply power or adjust a heat level, that is, a power level, of each of the heating areas 12 and 14, and displaying information related to the induction heating device 10 may be provided inside the case 102. The interface unit 114 may be configured as a touch panel capable of both inputting information and displaying information via touch, but the interface unit 114 having a different structure may be used depending on the embodiment.

In addition, an operation area 118 disposed at a position corresponding to the interface unit 114 may be provided on the top plate 106. For user operation, characters, images, and the like may be pre-printed on the operation area 118. The user may perform a desired operation by touching a specific point in the operation area 118 based on the characters or images pre-printed on the operation area 118. In addition, information output by the interface unit 114 may be displayed through the operation area 118. Accordingly, the operation area 118 may also be referred to as a display.

The user may set the heat level, that is, the power level, of each of the heating areas 12 and 14 through the interface unit 114. For example, the power level may be displayed as a number (e.g., 1, 2, 3, ..., 9) on the operation area 118. When the power levels for the heating areas 12 and 14 are set, target power values of the working coils corresponding to the heating areas 12 and 14 and a heating frequency corresponding to the target power values may be determined. Based on the determined heating frequency, the controller may drive each working coil so that an output power value of each working coil matches the target power value set by the user.

A power supply unit 112 for supplying power to the working coil assemblies 122 and 124 or the interface unit 114 may be disposed in the space formed inside the case 102.

For reference, in the embodiment of FIG. 2, two working coil assemblies, that is, a first working coil assembly 122 and a second working coil assembly 124, disposed inside the case 102 are exemplarily shown, but according to an embodiment, one working coil assembly or three or more working coil assemblies may be disposed inside the case 102.

The working coil assemblies 122 and 124 may be disposed at positions corresponding to the heating areas 12 and 14, respectively. Each of the working coil assemblies 122 and 124 may include a working coil that forms an induced magnetic field using a high-frequency alternating current supplied by the power supply unit 112, and a heat insulation sheet for protecting the coil from heat generated by the container. For example, in FIG. 2, a first working coil assembly 122 may include a first working coil 132 for heating a container disposed in a first heating area 12 and a first heat insulation sheet 130. In addition, although not shown, a second working coil assembly 124 may include a second working coil and a second heat insulation sheet. According to an embodiment, the heat insulation sheet may not be disposed in each of the working coil assemblies 122 and 124. In the embodiment of FIG. 2, the first working coil and the second working coil may each be the heating means 151 shown in FIG. 1.

A temperature sensor may be disposed in a central portion of each working coil. For example, in FIG. 1, a temperature sensor 134 may be disposed in a central portion of the first working coil 132. Likewise, a temperature sensor may be disposed in a central portion of the second working coil. The temperature sensor may sense a temperature at its installed position and transmit the sensed temperature value to the controller 153. In one embodiment, the temperature sensor may be a thermistor temperature sensor having a variable resistor whose resistance value varies depending on the temperature, but the type of the temperature sensor is not limited thereto.

The controller 153 may perform an overheat protection operation of lowering an actual power value of the working coil or stopping the operation of the working coil when the temperature value transmitted from the temperature sensor is greater than or equal to a predetermined reference value.

Although not shown in FIG. 2, a board on which a plurality of circuits or elements including the controller 153 and the communication unit 154 are mounted may be disposed in the space formed inside the case 102. The controller 153 may perform a heating operation by driving each working coil according to the heating start command input by the user through the operation area 118 and the interface unit 114. When the user inputs a heating end command through the operation area 118 and the interface unit 114, the controller 153 may stop the operation of the working coil to stop the heating operation.

In addition, although not shown in FIG. 2, a speaker for voice output may be disposed in the space formed inside the case 102.

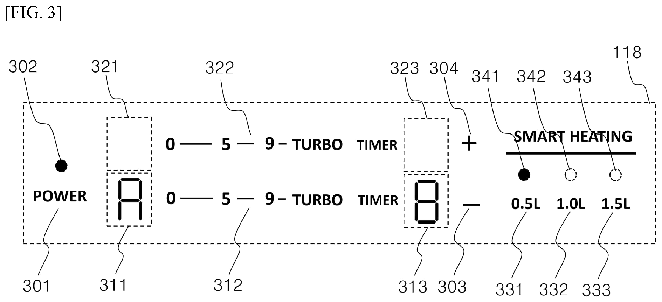

FIG. 3 shows a control unit of the cooking device according to one embodiment.

FIG. 3 shows an exemplary configuration of the operation area 118 of the cooking device, that is, the induction heating device 10, shown in FIG. 2. Referring to FIG. 3, the operation area 118 of the induction heating device 10 according to one embodiment may include a power button 301 and a power lamp 302. The user may input a power-on command by pressing the power button 301 when the induction heating device 10 is in a power-off state. When the power-on command is input, the induction heating device 10 is changed to a power-on state, and the power lamp 302 may be turned on. When the induction heating device 10 is in a power-on state, the user may input a power-off command by pressing the power button 301. When the power-off command is input, the induction heating device 10 is changed to a power-off state, and the power lamp 302 may be turned off.

The operating unit 118 of the induction heating device 10 according to one embodiment may include a first power level display window 311, a first power level adjustment button 312, a second power level display window 321, and a second power level adjustment button 322. The user may input or change a power level of the first working coil through the first power level adjustment button 312.

When the user inputs or changes the power level of the first working coil through the first power level adjustment button 312, the power level of the first working coil may be displayed in the first power level display window 311. The user may input or change a power level of the second working coil through the second power level adjustment button 322. When the user inputs or changes the power level of the second working coil through the second power level adjustment button 322, the power level of the second working coil may be displayed on the second power level display window 321.

In one embodiment, the power level of the first working coil and the power level of the second working coil may be set to any one of 0, 1, 2, 3, 4, 5, 6, 7, 8, 9, or Turbo. As the power level increases, the output power value of each working coil may increase. However, the range and numerical value of the power level of each working coil may be set differently depending on the embodiment.

When the user selects a power level from 1 to Turbo through the first power level adjustment button 312 or the second power level adjustment button 322, power is supplied to each working coil and a heating operation may begin. That is, the selection of the power level from 1 to Turbo through the first power level adjustment button 312 or the second power level adjustment button 322 may be the same as the input of the heating start command. When the user inputs a power level of 0 through the first power level adjustment button 312 or the second power level adjustment button 322, the power supply to each working coil is cut off, and the heating operation may be ended. That is, the input of the power level of 0 through the first power level adjustment button 312 or the second power level adjustment button 322 may be the same as the input of the heating end command.

The operation area 118 of the induction heating device according to one embodiment may include a first timer display window 313, a second timer display window 323, and timer adjustment buttons 303 and 304. When each working coil is driven, the user may input or change a driving time of each working coil in a predetermined unit (e.g., minutes) through the timer adjustment buttons 303 and 304. The user may decrease the driving time through the timer decrease button 303 or increase the driving time through the timer increase button 304.

When the user inputs the driving time of each working coil, the driving time of each working coil may be displayed on the first timer display window 313 or the second timer display window 323. The driving time displayed on the first timer display window 313 or the second timer display window 323 may decrease until it becomes 0. When the driving time displayed on the first timer display window 313 or the second timer display window 323 becomes 0, the driving of the working coil may be ended.

The operation area 118 of the induction heating device according to one embodiment may include load amount input buttons 331, 332, and 333 and load amount indicator lamps 341, 342, and 343. The user may input the capacity or volume, that is, the load amount, of the load in the container through the load amount input buttons 331, 332, and 333. When the user inputs the load amount by pressing any one of the load amount input buttons 331, 332, and 333, a lamp among the load amount display lamps 341, 342, and 343 corresponding to a load pressed by the user may be turned on.

In FIG. 3, three load amount input buttons 331, 332, and 333 corresponding to loads of 0.5 L, 1.0 L, and 1.5 L, respectively, are exemplarily shown, but the number of load amount input buttons and the numerical value of the load assigned to each load amount input button may vary depending on the embodiment.

In another embodiment, different numbers, characters, and units for displaying the capacity of the load may be assigned to each of the load amount input buttons 331, 332, and 333. For example, each of the load amount input buttons 331, 332, and 333 may be assigned a number and unit (e.g., 0.2 kg, 0.5 kg, 1.0 kg) representing the mass of the load. As another example, each of the load amount input buttons 331, 332, and 333 may be assigned a letter or number (e.g., small, medium, large, or 1, 2, 3) representing the relative capacity of the load.

In still another embodiment, the induction heating device 10 may include a voice input device (e.g., a microphone) for receiving the user's voice. The user may also input the capacity of the load by voice through the voice input device instead of the load amount input buttons 331, 332, and 333.

In yet another embodiment, fine capacity adjustment buttons (not shown) may be disposed on one side of the load amount input buttons 331, 332, and 333. The user may adjust the load amount more finely by pressing the fine capacity adjustment buttons. For example, when the user presses the fine capacity decrease button in a state in which the user has entered a load amount of 0.5 L by pressing the load amount input button 331, the load amount may be reduced by a predetermined unit capacity (e.g., 0.1 L), and when the user presses the fine capacity increase button, the load amount may be increased by a predetermined fine adjustment capacity (e.g., 0.1 L). The unit capacity assigned to the fine capacity adjustment button may vary depending on the embodiment.

The load amount input by the user through the load amount input buttons 331, 332, and 333 may be transmitted to the management server 30 through the communication unit 154 and then transmitted back to the user terminal 20, or may be transmitted directly to the user terminal 20 through the communication unit 154.

In one embodiment, the user may provide a container containing the load to the first heating area 12, and may change the induction heating device 10 to a power-on state by pressing the power button 301.

In a state in which the container is provided on the first working coil 132, the user may input the load amount (0.5 L) of the load in the container by pressing the first load amount input button 331 among the load amount input buttons 331, 332, and 333. When the container is not provided on the first working coil 132 when the user presses one of the load amount input buttons 331, 332, and 333, a predetermined alarm operation (e.g., voice output through a speaker and/or display of a specific character (e.g., "u") on the first power level display window 311) may be performed. In another embodiment, when the container is not provided on the first working coil 132, a voice indicating the absence of the container may be output through a speaker of the induction heating device 10.

In a state in which the container is provided on the first working coil 132, when the user inputs a load amount by pressing the first load amount input button 331, the first load amount display lamp 331 may flash for a predetermined time (e.g., 5 seconds). While the first load amount display lamp 331 is flashing, the first working coil 132 is not driven, and the user may change the load amount by pressing other load amount input buttons 332 and 333. When the predetermined time (e.g., 5 seconds) has elapsed from the time the user inputs the first load amount input button 331, the first load amount display lamp 331 may be changed from a flashing state to an on state.

In one embodiment, load amount information input by the user through the load amount input buttons 331, 332, and 333 may be transmitted to the user terminal 20.

In one embodiment, when a smart heating operation to be described below is performed, a specific character (e.g., "A") for indicating that the smart heating operation is being performed may be displayed on the first power level display window 311.

The induction heating device shown in FIGS. 2 and 3 is merely an example of one of several types of cooking devices to which the embodiments of the present disclosure may be applied. That is, embodiments to be described below may be applied to other types of cooking devices other than induction heating device.

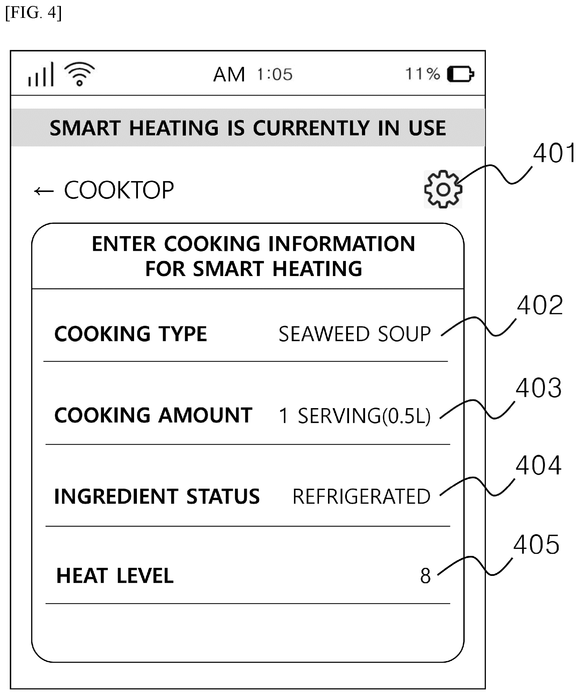

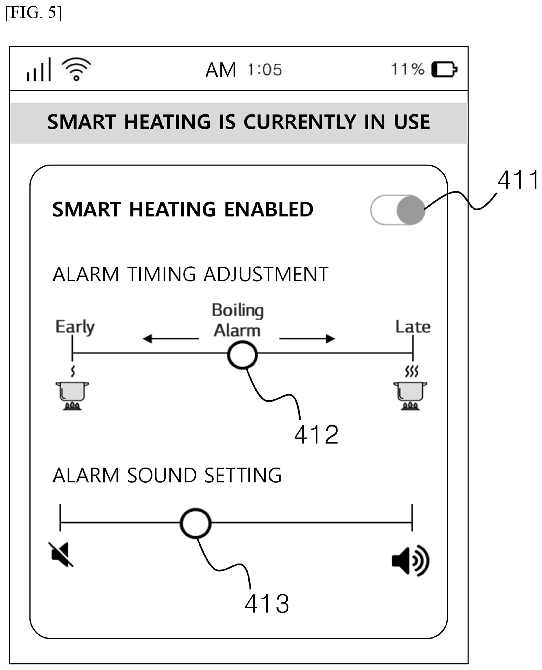

FIG. 4 shows a cooking information input screen displayed on a display of the user terminal in one embodiment. In addition, FIG. 5 shows a boiling alarm function setting screen displayed on the display of the user terminal in one embodiment.

FIGS. 4 and 5 show an embodiment in which the user terminal 20 is a smartphone having a touch panel. However, the type of the user terminal 20 is not limited to a smartphone, and the user terminal 20 may also be a different type of terminal. In one embodiment, the user may input cooking information for the smart heating operation through the user terminal 20.

In the present disclosure, when the smart heating operation is performed by the cooking device 10, a boiling alarm operation for notifying the user that the load is boiling when the load in the container heated by the cooking device 10 boils may be performed through the user terminal 20 or the cooking device 10. In addition, when the smart heating operation is performed, the heat level of the heating means may be maintained at a predetermined level when the load in the container boils.

In one embodiment, the cooking information may include cooking type information, cooking amount information, and ingredient status information. The user may input each information through a cooking type information input area 402, a cooking amount input area 403, and an ingredient status input area 404 displayed on the cooking information input screen (see FIG. 4) displayed on the display 251 of the user terminal 20. In addition, the user may set a desired heat level through a heat level input area 405.

The cooking type information is information indicating the type of dish (e.g., seaweed soup, ramen, braised short ribs) to be cooked by the user using the cooking device 10. The cooking amount information is information indicating the volume or capacity (e.g., 0.5 L, 1.0 L, 1.5 L) of the food contained in the container provided by the user to the cooking device 10. The ingredient status information is information indicating a storage condition (e.g., refrigerated or room temperature) of the food contained in the container provided by the user to the cooking device 10.

According to an embodiment, pre-stored information may be provided in each of the areas 402, 403, 404, and 405, and the user may input information by selecting one of the pieces of the pre-stored information. For example, when the user touches the cooking amount input area 403, pre-stored cooking amount information (e.g., 0.5 L, 1.0 L, 1.5 L) may be displayed, and the user may select any one of the pieces of the displayed cooking amount information. In another embodiment, the user may directly input desired information into each of the areas 402, 403, 404, and 405.

When the user inputs cooking information, that is, cooking type information, cooking amount information, and ingredient status information, through the user terminal 20, the input cooking information may be transmitted to the cooking device 10 through the management server 30. According to an embodiment, the cooking information may be transmitted directly to the cooking device 10 without passing through the management server 30.

Meanwhile, the user may enter a setting screen for the smart heating operation by pressing the setting button 401 on the screen shown in FIG. 4. FIG. 5 shows a setting screen displayed on the display 251 of the user terminal 20 when the user presses the setting button 401.

On the setting screen of FIG. 5, the user may set whether to use the smart heating operation function by pressing a smart heating operation on/off button 411.

When the smart heating operation on/off button 411 is in an off state, the cooking device 10 operates only according to the heat level (power level) input by the user, and the boiling alarm operation is not performed. In addition, when the smart heating operation on/off button 411 is in the off state, a message indicating that the smart heating operation function is in use ("Smart heating is currently in use") shown in FIG. 4 or 5 may not be displayed on the screen.

When the smart heating operation on/off button 411 is in an on state, the boiling alarm operation to be described below is performed based on the cooking information input by the user through the cooking information input screen (see FIG. 4). In addition, when the smart heating operation on/off button 411 is in the on state, the message indicating that the smart heating operation function is in use ("Smart heating is currently in use") may be displayed on the screen, as shown in FIG. 4 or 5.

In addition, the user may adjust the boiling alarm timing using a boiling alarm timing adjustment button 412 on the setting screen (see FIG. 5). For example, the user may change the boiling alarm timing to an earlier time point than a predetermined reference time point by moving the boiling alarm timing adjustment button 412 to the left. The user may change the boiling alarm timing to a later time point than the predetermined reference time point by moving the boiling alarm timing adjustment button 412 to the right. The method for adjusting the boiling alarm timing and the user interface are merely one example, and the boiling alarm timing may be adjusted by other methods and user interfaces.

In addition, the user may adjust a volume of the sound output during the boiling alarm operation using a volume adjustment button 413 on the setting screen (see FIG. 5). For example, the user may decrease the volume by moving the volume adjustment button 413 to the left or increase the volume by moving the volume adjustment button 413 to the right. The volume adjustment method and the user interface are merely one example, and the volume of the sound output during the boiling alarm operation may be adjusted by other methods and user interfaces.

After the smart heating operation on/off button 411 is in the on state and the user inputs cooking information through the user terminal 20, the user may input the heating start command to the cooking device 10. For example, the user may input the heating start command by inputting the power level through the power level adjustment buttons 312 and 322 of the cooking device 10 shown in FIG. 3. In another embodiment, the user may input the heating start command to the cooking device 10 by touching a heating start button (not shown) displayed on the user terminal 20.

When the user inputs the heating start command, the controller 153 may drive the heating means 151 to perform a heating operation.

When the heating means 151 is driven to perform the heating operation, the controller 153 may determine the temperature value of the load in the container provided to the heating area based on at least one of the cooking information, that is, cooking type information, cooking amount information, and ingredient status information, input by the user, and the temperature value sensed by the temperature sensor 152.

In one embodiment, the controller 153 may determine the temperature value of the load using a pre-generated temperature value determination model. Here, the temperature value determination model may be generated through machine learning performed in a state in which at least one of the cooking type information, the cooking amount information, and the ingredient status information, and a temperature value sensed by the temperature sensor 152 are set as inputs and a temperature value of a load is set as a target. The machine learning method used to generate the temperature value determination model may be one of several known machine learning methods.

In one embodiment, the controller 153 may calculate a temperature value distribution of the load in the container using the pre-generated temperature value determination model. In this case, the temperature value determination model may be generated through machine learning performed in a state in which at least one of the cooking type information, the cooking amount information, and the ingredient status information, and a temperature value sensed by the temperature sensor 152 are set as inputs and the temperature value distribution of the load is set as a target. The controller 153 may determine that any one of the temperature values included in the calculated temperature value distribution (e.g., Lower Specification Limit, Upper Specification Limit, or intermediate value) is the temperature value of the load in the container.

According to the above-described method, the controller 153 may determine the temperature value of the load at a predetermined time interval (e.g., 0.1 seconds or 1 second) while the load in the container is heated by the heating means 151.

While the heating means 151 is driven to perform a heating operation, the controller 153 may control the heat level of the heating means 151 according to the temperature value of the load and a predetermined heating profile. In one embodiment, the heating profile may include a plurality of temperature values of loads and heat level values corresponding to the temperature values of the loads. In the heating profile, each of the heat level values may be set to decrease whenever the temperature value of the load increases. That is, the controller 153 may control the heat level of the heating means 151 to decrease as the temperature value of the load increases.

The controller 153 may compare the temperature value of the load with a predetermined reference temperature value whenever the temperature value of the load is determined.

In one embodiment, the reference temperature value may be determined by the boiling alarm timing set by the user. For example, when the boiling alarm timing set by the user is the predetermined reference time point, the reference temperature value may be determined to be a default value (e.g., 95 °C) corresponding to the reference time point. When the user sets the boiling alarm timing to a time point 2 seconds earlier than the reference time point, the reference temperature value may be determined to be a value (e.g., 93 °C) lower than the default value (e.g., 95 °C) corresponding to the reference time point. When the user sets the boiling alarm timing to a time point 2 seconds later than the reference time point, the reference temperature value may be determined to be a value (e.g., 97 °C) higher than the default value (e.g., 95 °C) corresponding to the reference time point. This is merely an example, and a relationship between the increase/decrease amount of the boiling alarm timing and the increase/decrease amount of the reference temperature value may vary depending on the embodiment.

As a result of comparing the temperature value of the load with the predetermined reference temperature value, when the temperature value of the load is lower than the reference temperature value, the controller 153 may continue operating the heating means 151.

As the result of comparing the temperature value of the load with the predetermined reference temperature value, when the temperature value of the load is greater than or equal to the reference temperature value, the controller 153 may perform the boiling alarm operation. For example, when the temperature value of the load is greater than or equal to the reference temperature value, the controller 153 may control a predetermined sound to be output through a speaker provided in the cooking device 10. As another example, the controller 153 may request the execution of the boiling alarm operation through the management server 30 or directly to the user terminal 20. Accordingly, the predetermined sound or a predetermined message may be output through the speaker provided in the user terminal 20.

Through such a boiling alarm operation, the user can easily recognize that the load in the container is in a boiling state.

In one embodiment, when the temperature value of the load is greater than or equal to the reference temperature value, the controller 153 may maintain the heat level of the heating means 151 at the predetermined level. Accordingly, the heat level of the heating means 151 may be maintained at a constant level until the user's command or operation is input.

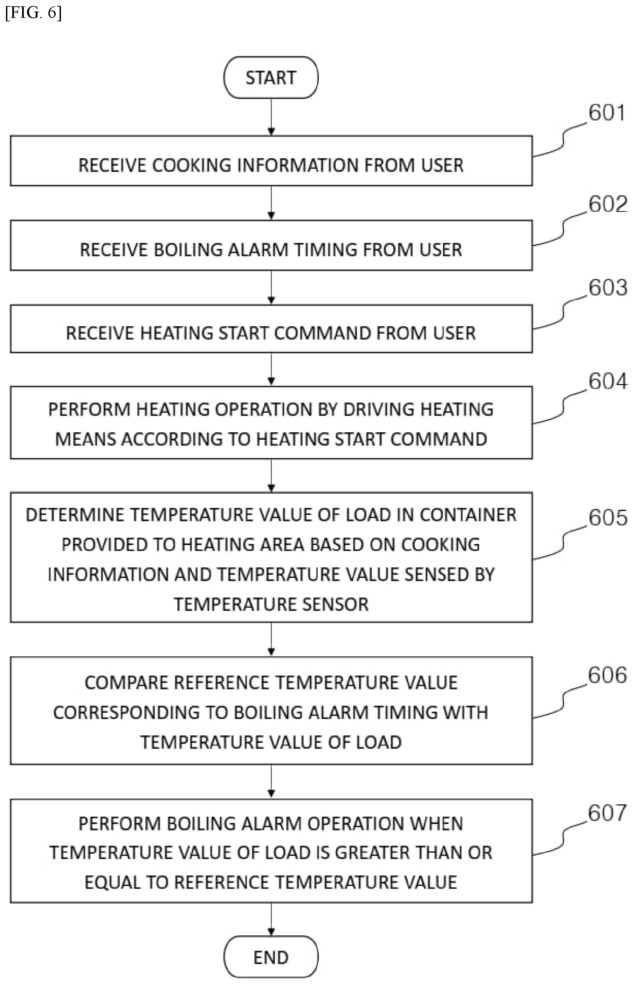

FIG. 6 is a flowchart showing a method for controlling a cooking device according to one embodiment.

The controller 153 of the cooking device 10 according to one embodiment may receive cooking information from the user (601).

In one embodiment, the cooking information may include cooking type information, cooking amount information, and ingredient status information.

Subsequently, the controller 153 may receive a boiling alarm timing from the user (602).

Subsequently, the controller 153 may receive a heating start command from the user (603).

Subsequently, the controller 153 may drive the heating means 151 according to the heating start command to perform a heating operation (604).

The controller 153 may determine the temperature value of the load in the container provided to the heating area based on cooking information and the temperature value sensed by the temperature sensor (605).

In one embodiment, the determining of the temperature value of the load in the container provided to the heating area (605) may include determining the temperature value of the load using a pre-generated temperature value determination model.

In one embodiment, the temperature value determination model may be generated by machine learning performed in a state in which cooking information and temperature values are set as inputs and the temperature value of the load is set as a target.

In one embodiment, the determining of the temperature value of the load in the container provided to the heating area (605) may include calculating the temperature value distribution of the load in the container and determining that any one of the temperature values included in the calculated temperature value distribution is the temperature value of the load in the container.

The controller 153 may compare a reference temperature value corresponding to the boiling alarm timing with the temperature value of the load (606).

In one embodiment, when the boiling alarm timing is set to a time point earlier than a predetermined reference time point, the reference temperature value may decrease. In one embodiment, when the boiling alarm timing is set to a time point later than the reference time point, the reference temperature value may increase.

The controller 153 may perform a boiling alarm operation when the temperature value of the load is greater than or equal to the reference temperature value (607).

In one embodiment, the performing of the boiling alarm operation when the temperature value of the load is greater than or equal to the reference temperature value may include controlling a predetermined sound or message to be output through the user terminal 20 or the cooking device 10.

Although not shown, the method for controlling the cooking device 10 according to one embodiment may further include maintaining the heat level of the heating means 151 at a predetermined level when the temperature value of the load in the container is greater than or equal to the reference temperature value.

Although the present disclosure has been described above with reference to the exemplary drawings, the present disclosure is not limited by the embodiments and drawings disclosed in the present disclosure, and various modifications may be made by those skilled in the art. In addition, even when the effects according to the configuration has not been explicitly described while describing the embodiments, the effects predictable by the corresponding configuration should also be acknowledged.

## Claims

1. A cooking device comprising:
a heating means disposed at a position corresponding to a heating area;
a temperature sensor disposed on one side of the heating means; and
a controller configured to control driving of the heating means,
wherein the controller is configured to:
receive cooking information from a user; receive a boiling alarm timing from the user; receive a heating start command from the user; perform a heating operation by driving the heating means according to the heating start command; determine a temperature value of a load in a container provided to the heating area on the basis of at least one of cooking type information,
cooking amount information, and ingredient status information, and a temperature value sensed by the temperature sensor; compare a reference temperature value corresponding to the boiling alarm timing with the temperature value of the load; and perform a boiling alarm operation if the temperature value of the load is greater than or equal to the reference temperature value.

2. The cooking device of claim 1, wherein the cooking information includes at least one of the cooking type information, the cooking amount information, and the ingredient status information.

3. The cooking device of claim 1, wherein the controller determines the temperature value of the load using a pre-generated temperature value determination model.

4. The cooking device of claim 3, wherein the temperature value determination model is generated by machine learning performed in a state in which the cooking information and the temperature value are set as inputs and the temperature value of the load is set as a target.

5. The cooking device of claim 1, wherein, when the boiling alarm timing is set to a time point earlier than a predetermined reference time point, the reference temperature value decreases, and when the boiling alarm timing is set to a time point later than the reference time point, the reference temperature value increases.

6. The cooking device of claim 1, wherein the controller calculates a temperature value distribution of the load in the container based on the cooking information and the temperature value sensed by the temperature sensor, and determines that any one of the temperature values included in the distribution is the temperature value of the load in the container.

7. The cooking device of claim 1, wherein the boiling alarm operation is an operation in which a predetermined sound or message is output through a user terminal or the cooking device.

8. The cooking device of claim 1, wherein the controller maintains a heat level of the heating means at a predetermined level when the temperature value of the load is greater than or equal to the reference temperature value.

9. A method for controlling a cooking device including a heating means disposed at a position corresponding to a heating area, a temperature sensor disposed on one side of the heating means, and a controller for controlling driving of the heating means, the method comprising:
receiving cooking information from a user;
receiving a boiling alarm timing from the user;
receiving a heating start command from the user;
driving the heating means to perform a heating operation according to the heating start command;
determining a temperature value of a load in a container provided to the heating area based on at least one of cooking type information, cooking amount information, and ingredient status information, and a temperature value sensed by the temperature sensor;
comparing a reference temperature value corresponding to the boiling alarm timing with the temperature value of the load; and
performing a boiling alarm operation when the temperature value of the load is greater than or equal to the reference temperature value.

10. The method of claim 9, wherein the cooking information includes at least one of the cooking type information, the cooking amount information, and the ingredient status information.

11. The method of claim 9, wherein the determining of the temperature value of the load in the container provided to the heating area includes determining the temperature value of the load using a pre-generated temperature value determination model.

12. The method of claim 11, wherein the temperature value determination model is generated by machine learning performed in a state in which the cooking information and the temperature value are set as inputs and the temperature value of the load is set as a target.

13. The method of claim 9, wherein, when the boiling alarm timing is set to a time point earlier than a predetermined reference time point, the reference temperature value decreases, and when the boiling alarm timing is set to a time point later than the reference time point, the reference temperature value increases.

14. The method of claim 9, wherein the determining of the temperature value of the load in the container provided to the heating area includes:
calculating a temperature value distribution of the load in the container; and
determining that any one of the temperature values included in the distribution is the temperature value of the load in the container.

15. The method of claim 9, wherein the performing of the boiling alarm operation when the temperature value of the load is greater than or equal to the reference temperature value includes controlling a predetermined sound or message to be output through a user terminal or the cooking device.

16. The method of claim 9, further comprising maintaining a heat level of the heating means at a predetermined level when the temperature value of the load is greater than or equal to the reference temperature value.
